# EUROPÄISCHE PATENTSCHRIFT

(11) **EP 0 872 499 B1**
(45) Veröffentlichungstag und Bekanntmachung des Hinweises auf die Patenterteilung: **06.10.2004**
(21) Anmeldenummer: 98105908.2
(22) Anmeldetag: 01.04.1998
(51) Int. Cl.: C08G 18/10, C08G 18/71, C08G 18/77

(54) **Wässrige 2-Komponenten Bindemittel und deren Verwendung**
Aqueous two-component binders and their use
Liants aqueux à deux composants et leur utilisation

(30) Priorität: 14.04.1997 DE 19715427
(43) Veröffentlichungstag der Anmeldung: 21.10.1998
(73) Patentinhaber: Bayer MaterialScience AG, 51368 Leverkusen (DE)
(72) Erfinder: Hovestadt, Wieland, Dr., 47800 Krefeld (DE); Schmalstieg, Lutz, Dr., 50676 Köln (DE); Wamprecht, Christian, Dr., 41472 Neuss (DE); Noble, Karl-Ludwig, Dr., 51467 Bergisch Gladbach (DE)

(56) Entgegenhaltungen:
- EP-A- 0 315 006
- EP-A- 0 814 105
- WO-A-97/03101
- US-A- 5 364 955
- US-A- 5 614 604

## Beschreibung

Die Erfindung betrifft eine wäßrige zweikomponentige Bindemittelkombination auf Basis von hydroxy- und/oder aminofunktionellen wasserverdünnbaren Harzen und Härtern, die Isocyanat- und Alkoxysilylgruppen enthalten und deren Verwendung in Lacken, Beschichtungen und Dichtmassen.

Zweikomponenten-Polyurethanlacke des Standes der Technik haben aufgrund ihrer hervorragenden Eigenschaften eine große Bedeutung auf dem Beschichtungssektor erlangt. Von Nachteil ist, daß zur Verarbeitung in den meisten Fällen größere Mengen organischer Lösemittel erforderlich sind. In nahezu allen Anwendungsbereichen werden jedoch verstärkt festkörperreiche oder vor allem auch wasserverdünnbare Beschichtungsmittel gefordert, um die Lösemittelabgabe und die damit verbundene Umweltbelastung so gering wie möglich zu halten.

Die Verwendung von Wasser als flüssige Phase in Zweikomponenten-Polyurethanlakken schien bis vor einigen Jahren nicht ohne weiteres möglich, da Isocyanatgruppen nicht nur mit den Hydroxygruppen des Harzes sondern auch mit Wasser unter Harnstoff- und Kohlendioxidbildung reagieren. Hierdurch werden in der Regel die Verarbeitungszeit, die Applikationssicherheit, die Erzielung ausreichender blasenfreier Schichtstärken und die Beständigkeitseigenschaften der Lacke und Beschichtungen auf nicht mehr praxisgerechte Werte verschlechtert.

In den letzten Jahren wurden jedoch verstärkt Anstrengungen unternommen, um diese Probleme zu reduzieren. Eine erste Lösungsmöglichkeit wird in der DE-A 38 29 587 beschrieben, in der ausgewählte Polyhydroxypolyacrylat-Sekundärdispersionen mit Polyisocyanaten, die freie Isocyanatgruppen aufweisen, zu wäßrigen Zweikomponentensystemen kombiniert werden.

Mittlerweile konnte gezeigt werden, daß sich dieses Prinzip auch auf andere hydroxyfunktionelle Harzdispersionen übertragen läßt, so daß die Eigenschaften der Lacke variiert werden können. Zum Beispiel beschreibt die EP-A 557 844 Zweikomponenten-Polyurethan-Beschichtungen auf Basis von hydroxyfunktionellen Primärdispersionen, die EP-A 543 228 solche auf Basis von Polyester-Polyacrylat-Hybriddispersionen, die EP-A 741 176 solche auf Basis fremdemulgierter Alkydharze, die EP-A 496 205 solche auf Basis von urethanmodifizierten Polyesterdispersionen oder die EP-A 542 105 solche auf Basis von Mischungen verschiedener Harztypen.

Als Polyisocyanate können in den Zweikomponenten-Polyurethanbeschichtungen nicht hydrophilierte oder auch hydrophilierte Polyisocyanate, wie sie z. B. in EP-A 443 138, in EP-A 486 881 oder in EP-A 540 985 beschrieben sind, verwendet werden. Durch die Verwendung von hydrophilierten Polyisocyanaten wird die Einemulgierbarkeit des Polyisocyanats in die Harzdispersion verbessert, hierdurch die Applikationssicherheit, die Verträglichkeit der Komponenten und der Glanz der Beschichtungen erhöht. Durch die zusätzlichen hydrophilen Gruppen sind jedoch andere wesentliche Lackeigenschaften, vor allem die Wasserfestigkeit der Beschichtungen und die Topfzeit, reduziert. Außerdem ist das Problem des Auftretens von Reaktionsbläschen bei hohen Schichtstärken bis heute nicht gelöst.

Prinzipiell sind in jüngster Zeit dual vernetzende wäßrige Polyurethanbeschichtungssysteme mit guter Wasserfestigkeit bekannt geworden. Hierbei werden hydroxyfunktionelle Polyarcylatdispersionen, die zusätzlich Alkoxysilyl- bzw. Silanolfunktionen enthalten, in Abmischung mit hydroxyfunktionellen Polyurethandispersionen als Harzkomponente eingesetzt. Als Härter wird eine Polyisocyanatverbindung verwendet (DE-A 19 613 629). Problematisch bei den Produkten dieser Veröffentlichung ist die Tatsache, daß die OH- und Alkoxysilyl- bzw. Silanol-funktionellen Dispersionen nur in einem sehr engen pH-Wert- und Temperaturbereich stabil sind, d.h. nur unter besonderen Vorsichtsmaßnahmen hergestellt und formuliert werden können und daher nur für wenige spezielle Anwendungsbereiche einsetzbar sind.

US-A 5,614,604 offenbart Silicium-haltige Polyurethanverdicker aus einem Polyisocyanat, einem Polyetherpolyol, einer monofunktionellen NCO-reaktiven, Verbindung, einem Silan-funktionellen Material und Wasser. In wie weit sich solche oder ähnlich aufgebaute Silan-modifizierte Polyurethane in Kombination mit wässrigen Vernetzerharzen als 2K-Polyurethan-Systeme mit praktisch einsetzbaren Verarbeitungseigenschaften nutzen lassen, sind der Offenbarung nicht zu entnehmen.

EP-A 0 315 006 offenbart lagerstabile wässrige Lösungen oder Dispersionen kationisch modifizierter, Alkoxysilylgruppen-haltiger Polyurethane, die sich zu Schichten aushärten lassen. Die Kombination solcher Lösungen oder Dispersionen mit wässrigen OH-funktionellen Vernetzerharzen wird nicht offenbart.

US-A 5,364,955 offenbart die Umsetzung von Aminoalkyltrialkoxysilanen mit Malein- oder Fumarsäureestem sowie die Verwendung dieser Umsetzungsprodukte zur Herstellung von Alkoxysilyl- und Harnstoffgruppen-haltigen Prepolymeren. Als Verwendung wird allgemein die Herstellung von Dichtstoffen angegeben, ohne jedoch konkrete Formulierungen oder Eigenschaftsprofile anzugeben.

Die Aufgabe der Erfindung bestand also darin, Zweikomponenten-Polyurethanbeschichtungen mit verbesserter Wasserfestigkeit bei hohem Glanz, reduziertem Glanzschleier, verlängerter Topfzeit, hoher Applikationssicherheit und ausreichender blasenfreier Schichtstärke zu entwickeln, die universell einsetzbar sind.

Diese Aufgabe konnte überraschenderweise durch die nachfolgend näher beschriebene Bindemittelkombination auf Basis von hydroxy- oder aminofunktionellen wasserverdünnbaren Harzen und Härtern, die Isocyanat- und Alkoxysilylgruppen enthalten, und durch das Verfahren zur Herstellung dieser Bindemittelkombination gelöst werden.

Gegenstand der vorliegenden Erfindung ist daher eine Bindemittelkombination aus
a) 30 bis 90 Gew.-% einer wäßrigen, hydroxy- und/oder aminofunktionellen Harzdispersion,
   und
b) 10 bis 70 Gew.-% einer Härterkomponente mit einem Gehalt an freien Isocyanatgruppen von 10 bis 23 Gew.-% und einer Viskosität von 50 bis 10000 mPas (23°C, D = 40),
dadurch gekennzeichnet, daß die Komponente b) Isocyanat und Alkoxysilylgruppen aufweist und das molare Verhältnis der Hydroxygruppen der Komponente a) zu den Isocyanatgruppen der Komponente b) zwischen 0,5 : 1 und 2 : 1 liegt.

Als Komponente a) können alle in der wäßrigen Zweikomponenten-Polyurethanbeschichtungstechnologie üblichen Harzdispersionen eingesetzt werden. Derartige Harze und die Verfahren zur Herstellung dieser Harze sind literaturbekannt. So können die Harze z. B. aus der Klasse der Polyester, Polyacrylate, Polyurethane, Polyharnstoffe, Polycarbonate oder Polyether aufgebaut sein. Auch der Einsatz von beliebigen Hybriddispersionen oder beliebigen Mischungen verschiedener Dispersionen ist möglich. In der Regel sind die Harze hydroxy- oder aminofunktionell. In Ausnahmefällen ist es aber auch möglich, nicht-funktionelle Dispersionen als Bindemittelkomponente in Zweikomponenten-Polyurethanbeschichtungen einzusetzen.

Bei der Härterkomponente b) handelt es sich um beliebige organische Polyisocyanate mit aliphatisch, cycloaliphatisch, araliphatisch und/oder aromatisch gebundenen freien Isocyanatgruppen, die zusätzlich Alkoxysilylgruppen enthalten mit einer mittleren NCO-Funktionalität zwischen 2,0 und 5,0, bevorzugt 2,2 und 4,0.

Der Einsatz von Härtern in Zweikomponenten-Polyurethanbeschichtungen ohne Silangruppen ist bekannt. Sehr gut geeignet sind beispielsweise Lackpolyisocyanate" auf Basis von Hexamethylendiisocyanat (HDI), von 1-Isocyanato-3,3,5-trimethyl-5-isocyanatomethyl-cyclohexan (IPDI) und/oder Bis(isocyanatocyclohexyl)-methan oder anderer aliphatischer Diisocyanate oder Mischungen dieser Diisocyanate. Unter Lackpolyisocyanaten" auf Basis von Diisocyanaten sind die an sich bekannten Biuret-, Urethan-, Uretdion- und/oder Isocyanuratgruppen aufweisenden Derivate dieser Diisocyanate zu verstehen, die im Anschluß an ihre Herstellung in bekannter Weise, vorzugsweise durch Destillation, von überschüssigem Ausgangsdiisocyanat bis auf einen Restgehalt von weniger als 0,5 % befreit worden sind. Die Verfahren zur Herstellung derartiger Lackpolyisocanate" sind beispielsweise in den US-Patentschriften 31 24 605, 33 58 010, 39 03 126, 39 03 127, 39 76 622 oder 43 24 879 beschrieben.

Möglich ist auch der Einsatz aromatischer Polyisocyanate, z.B. Lackpolyisocyanate" auf Basis von 2,4-Diisocyanatotoluol oder dessen technischen Gemischen mit 2,6-Diisocyanatotoluol oder auf Basis von 4,4'-Diisocyanatodiphenylmethan bzw. dessen Gemischen mit seinen Isomeren und/oder höheren Homologen. Grundsätzlich möglich ist selbstverständlich auch der Einsatz beliebiger Gemische der beispielhaft genannten Polyisocyanate.

Um eine bessere Einarbeitbarkeit der Härter zu ermöglichen, können in Zweikomponenten-Polyurethanbeschichtungen auch hydrohilierte Polyisocyanate alleine oder in Mischung mit den oben beschriebenen nicht hydrophilierten Polyisocyanaten eingesetzt werden. Die Hydrophilierung kann z. B. anionisch, kationisch oder nichtionisch über interne oder externe Emulgatoren wie Polyether erfolgen. Derartige Polyisocyanate werden z. B. in den Patentschriften EP-A 443 138, EP-A 469 389, EP-A 486 881, EP-A 510 438, EP-A 540 985, EP-A 645 410, EP-A 697 424 oder EP-A 728 785 beschrieben.

Die erfindungswesentliche Härterkomponente b) unterscheidet sich von den beschriebenen Polyisocyanaten des Standes der Technik dadurch, daß die Komponente b) neben den Isocyanatgruppen zusätzlich Alkoxysilylgruppen enthält. Diese Alkoxysilylmodifizierten Polyisocyanate werden durch anteilige Reaktion der Isocyanatgruppen bekannter Polyisocyanate mit an sich bekannten aminofunktionellen Alkoxysilylverbindungen der Formel (I) hergestellt, 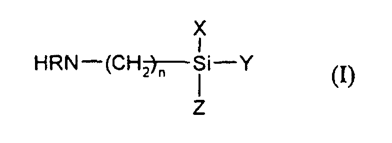 wobei
- R: für ein Wasserstoffatom oder einen linearen oder verzweigten Alkylrest mit 1 bis 4 Kohlenstoffatomen steht,
- n: für eine ganze Zahl von 2 bis 4, vorzugsweise 3 steht und
- X,Y,Z: gleiche oder verschiedene organische Reste mit 1 bis 30 C-Atomen darstellen, mit der Maßgabe, daß mindestens einer der Reste eine Alkoxygruppe mit 1 bis 4 Kohlenstoffatomen, vorzugsweise eine Methoxy- oder Ethoxygruppe darstellt.

Beispiele für einsetzbare aminofunktionelle Alkoxysilylverbindungen sind 3-Aminopropyltrimethoxysilan, 3-Aminopropyltriethoxysilan oder 3-Aminopropyl-methyldiethoxysilan. Beispiele für bevorzugt einsetzbare Alkoxysilylverbindungen mit sekundären Aminofunktionen sind N-Methyl-3-aminopropyltrimethoxysilan, N-Butyl-3-aminopropyltrimethoxysilan oder N-Phenyl-3-aminopropyltrimethoxysilan.

Ganz besonders bevorzugt werden jedoch aminofunktionelle Alkoxysilylverbindungen eingesetzt, die gemäß der Lehre der US-A 5 364 955 durch die Umsetzung von Aminosilanen der allgemeinen Strukturformel (I), mit der Bedeutung R = H,
mit Malein- oder Fumarsäureestern der allgemeinen Strukturformel (II)

R'OOC-CH=CH-COOR" (II)

in welcher
- R' und R": gleiche oder verschiedene (Cyclo)-Alkylreste mit 1 bis 8 Kohlenstoffatomen bedeuten,
erhalten werden.

Bevorzugt eingesetzt werden Maleinsäuredimethylester und/oder Maleinsäurediethylester.

Im Rahmen der vorliegenden Erfindung wurde die Beobachtung gemacht, daß bei Verwendung dieser speziellen Alkoxysilylverbindungen unabhängig von der eingesetzten Menge eine besonders gute Einarbeitbarkeit der Komponente b) in die Komponente a) ermöglicht wird, hierdurch eine besonders hohe Applikationssicherheit erreicht wird, ein besonders hoher Glanz der Beschichtungen resultiert und keinerlei Versprödung der Lackfilme auftritt.

Die Umsetzung der Polyisocyanate mit den aminofunktionellen Alkoxysilylverbindungen kann in einfacher Weise durch Zudosieren der Aminosilylverbindung zum Polyisocyanat erfolgen, in der Regel im Temperaturbereich von 0°C bis 120°C, vorzugsweise 20°C bis 80°C.

Die Menge der zur Modifizierung der Polyisocyanatkomponente eingesetzten aminofunktionellen Alkoxysilylverbindung wird so gewählt, daß das molare Verhältnis der Alkoxysilylgruppen zu den Isocyanatgruppen der resultierenden Härterkomponente b) 0,008:1 bis 0,5:1, bevorzugt 0,008:1 bis 0,2:1, besonders bevorzugt 0,015:1 bis 0,2 l beträgt.

Prinzipiell ist es natürlich auch möglich, Polyisocyanate in einem höheren molaren Verhältnis oder sogar vollständig, d.h. entsprechend bis zu einem einem NCO/NH-Verhältnis von 1/1, mit den erfindungsgemäß einsetzbaren aminofunktionellen Alkoxysilylverbindungen umzusetzen und die entstandenen Reaktionsprodukte anschließend mit Polyisocyanaten abzumischen, so daß diese Mischungen als Härterkomponente b) den oben gemachten Angaben entsprechen.

Das molare Verhältnis der Hydroxygruppen der Komponente a) zu den Isocyanatgruppen der Komponente b) liegt zwischen 0,5 : 1 und 2 : 1, bevorzugt zwischen 0,5 : 1 und 1,5 : 1, besonders bevorzugt zwischen 0,75 : 1 und 1,5 : 1.

Die Härterkomponente b) weist bei 23°C im allgemeinen eine Viskosität von 50 bis 10 000, vorzugsweise 50 bis 2000 mPas (D = 40) auf Falls erforderlich, können die Polyisocyanate mit geringen Mengen an inerten Lösemitteln abgemischt werden, um die Viskosität auf einen Wert innerhalb der genannten Bereiche abzusenken. Die Menge derartiger Lösemittel wird jedoch maximal so bemessen, daß in den letztendlich erhaltenen erfindungsgemäßen Beschichtungsmitteln maximal 20 Gew.-%, bevorzugt 10 Gew.-%, Lösemittel vorliegt, wobei auch das gegebenenfalls in den Harzdispersionen a) noch vorliegende Lösemittel mit in die Berechnung eingeht. Als Lösemittel geeignet sind beispielsweise aliphatische oder aromatische Kohlenwasserstoffe, wie Xylol, Toluol, Solventnaphtha oder beispielsweise N-Methylpyrrolidon, Diethylenglykoldimethylether, Aceton, Methylethylketon, Methylisobutylketon, Ethylacetat, Butylacetat, Methoxypropylacetat oder Mischungen dieser oder anderer inerter Lösemittel.

Zur Herstellung der wäßrigen Bindemittelkombination wird die Harterkomponente b) in der wäßrigen Harzkomponente a) emulgiert. Vor der Zugabe der Komponente b) können der Komponente a) oder b) die üblichen Hilfs- und Zusatzmittel der Lacktechnologie einverleibt werden. Hierzu gehören beispielsweise Entschäumer, Verdikker, Verlaufshilfsmittel, Pigmente, Dispergierhilfsmittel und auch Lösemittel. Mit Wasser wird die erforderliche Verarbeitungsviskosität eingestellt. Im Vergleich zu den Polyisocyanaten des Standes der Technik, ist die erfindungsgemäße Härterkomponente b) in der Regel besonders leicht in der wäßrigen Harzkomponente a) emulgierbar. In den meisten Fällen reichen daher einfache Emulgiertechniken z. B. mit einem mechanischen Rührer oder oftmals auch eine einfache Mischung der beiden Komponenten per Hand aus, um Beschichtungen mit sehr guten Eigenschaften zu erreichen. Selbstverständlich können aber auch Mischtechniken mit höherer Scherenergie, wie z.B. der Strahldispergierung, wie sie in Farbe & Lack 102/3, 1996, S. 88 - 100 beschrieben wird, eingesetzt werden.

Die so erhaltenen erfindungsgemäßen Beschichtungsmittel eignen sich für alle Einsatzgebiete, in denen Beschichtungen mit erhöhtem Eigenschaftsprofil Verwendung finden, wie z. B. zur Beschichtung von mineralischen Baustoffen, Straßenbelagen, Holz und Holzwerkstoffen, metallischen Oberflächen, Kunststoffen oder Papier, außerdem zur Verklebung diverser Werkstoffe. Sie können beispielsweise als Grundierungen, Füller, pigmentierte Decklacke oder Klarlacke, z.B. im Bereich der Industrielackierung, Automobilerst- oder Autoreparaturlackierung eingesetzt werden. Besonders geeignet sind die Beschichtungsmittel für Anwendungen, in denen eine besonders hohe Applikationssicherheit und eine hohe Wasserfestigkeit gefordert werden, wie in der Autoreparatur-, (Groß)fahrzeug- und in der Industrielackierung.

Die Herstellung der Beschichtungen kann nach den unterschiedlichsten Spritzverfahren, wie z: B. Luftdruck-, Airless- oder Elektrostatik-Spritzverfahren unter Verwendung von Ein- oder Zweikomponenten-Spritzanlagen, aber auch durch Streichen, Rollen oder Rakeln erfolgen.

Die Trocknung und Aushärtung der Beschichtung erfolgt im allgemeinen unter normalen Temperaturbedingungen, d h ohne Erhitzung der Beschichtung. Die erfindungsgemäße Bindemittelkombination kann jedoch auch zur Herstellung von Beschichtungen eingesetzt werden, die nach Applikation bei erhöhter Temperatur, bei 40 bis 250°C, vorzugsweise 40 bis 150°C, getrocknet und ausgehärtet werden.

### Beispiele

Alle Angaben in % beziehen sich auf das Gewicht. Viskositätsmessungen wurden in einem Kegel-Platte-Viskosimeter nach DIN 53 019 bei D = 40 durchgeführt.

Die genannten Handelsbezeichnungen sind, auch wenn nicht eigens vermerkt, Warenzeichen.

### Herstellung der Härterkomponente b)

### Verwendete Polyisocyanate

### Polyisocyanat A

870 g eines Polyisocyanuratpolyisocyanats auf Basis Isophorondiisocyanat mit einem NCO-Gehalt von 11,5 % und einer Viskosität von 2000 mPas (23°C) 70%-ig gelöst in Methoxypropylacetat/Xylol 1:1, (Desmodur Z4470, Handelsprodukt der Bayer AG), werden vorgelegt und bei 100°C mit 93 g eines durch Ethoxylierung von Methanol hergestellten Polyethers vom mittleren Molekulargewicht 500 umgesetzt. Sobald ein konstanter NCO-Gehalt erreicht ist, verdünnt man mit Methoxypropylacetat/Xylol 1:1 auf einen Gesamtfestkörpergehalt von 70%.

Man erhalt so ein klares, wasserdispergierbares Polyisocyanat mit folgenden Kenndaten:
NCO-Gehalt: 9,6%
Viskosität: 500 mPas (23°C)

### Polyisocyanat B

Lösungsmittelfreies Polyisocyanuratpolyisocyanat, hergestellt durch katalytische Trimerisation von Hexamethylendiisocyanat mit einem NCO-Gehalt von 23% und einer Viskosität von 1200 mPas (23°C).

### Polyisocyanat C

Wasserdispergierbares Polyisocyanat auf Basis Hexamethylendiisocyanat mit einem NCO-Gehalt von 17,2 % und einer Viskosität von 3500 mPas (23°C) (Bayhydur N 3100, Handelsprodukt der Bayer AG).

### Beispiel 1

### Herstellung eines erfindungsgemäßen Härters:

45,9 g eines handelsüblichen Polyisocyanuratpolyisocyanats auf Basis Hexamethylendiisocyanat mit einem NCO-Gehalt von 21,5% und einer Viskosität von 3000 mPas (23°C) (Desmodur N3300, Handelsprodukt der Bayer AG) werden mit 83,1g einer aminofunktionellen Alkoxysilylverbindung, hergestellt gemäß US-P 5 364 955, Beispiel 5 (Umsetzungsprodukt aus Maleinsäurediethylester und (3-Aminopropyl)-trimethoxysilan), bei Raumtemperatur bis zur NCO-Freiheit (IR-Kontrolle) zur Reaktion gebracht. Anschließend mischt man mit 343 g Polyisocyanat B, 490 g Polyisocyanat A und 38 g Methoxypropylacetat ab.

### Beispiel 2

### Herstellung eines erfindungsgemäßen Härters:

473, 6 g Polyisocyanat A, 375,6 g Polyisocyanat B und 57,8 g Methoxypropylacetat werden in einem Reaktionsgefäß vorgelegt. Bei Raumtemperatur werden 93 g einer aminofunktionellen Alkoxysilylverbindung, hergestellt gemäß US-P 5 364 955, Beispiel 5, langsam zugetropft. Man rührt bei Raumtemperatur 1 Stunde nach und erhält ein Polyisocyanat mit folgenden Kenndaten:
NCO-Gehalt: 12,0%
Viskosität 2100 mPas (23°C)

### Beispiel 3

### Nicht erfindungsgemäßer Härter

Man stellt eine Mischung aus 400 g Polyisocyanat B, 571 g Polyisocyanat A und 29 g Methoxypropylacetat her.

### Beispiel 4

### Herstellung eines erfindungsgemäßen Härters:

19,5 g eines handelsüblichen Polyisocyanuratpolyisocyanats auf Basis Hexamethylendiisocyanat mit einem NCO-Gehalt von 21,5 % und einer Viskosität von 3000 mPas (23°C) (Desmodur N3300, Handelsprodukt der Bayer AG) werden mit 35,4 g einer aminofunktionellen Alkoxysilylverbindung, hergestellt gemäß US-P 5 364 955, Beispiel 5, bei Raumtemperatur bis zur NCO-Freiheit (IR-Kontrolle) zur Reaktion gebracht.

Anschließend mischt man mit 542 g Polyisocyant C und 397 g Polyisocyanat B und verdünnt mit Methoxypropylacetat auf einen Festkörpergehalt von 80 %.

### Beispiel 5

### Nicht erfindungsgemäßes Polyisocyanatgemisch

Man stellt eine Mischung her aus jeweils 80 %igen Lösungen von 577 g Polyisocyanat C und 423 g Polyiocyanat B in Methoxypropylacetat.

### Verwendungsbeispiele

### Beispiel 6

### Autoreparatur- und Großfahrzeuggrundierungsfüller

Als wasserverdünnbare Harzkomponente 1 dient ein Emulsionscopolymerisat auf Basis Methylmethacrylat, n-Butylacrylat, Hydroxypropylmethacrylat, Acrylsäure, einem handelsüblichen Emulgator und Ammoniumperoxodisulfat als Initiator Der Feststoffgehalt liegt bei 41 Gew.-%, der OH-Gehalt beträgt 2,0 Gew.-% (bezogen auf Festharz), die Säurezahl beträgt 23 mg KOH/g (bezogen auf Festharz) und der pH-Wert liegt bei 7,3.

Als Härter dienen die Polyisocyanate aus den Beispielen 1 bis 3. Es wurde ein NCO/OH-Verhältnis von 1:1 eingehalten. Bezogen auf Festharz wurden gleiche Additiv- und Füllstoffmengen verwendet.

Folgende Bestandteile wurden zur Herstellung eines Grundierungsfüllers eingesetzt (Mengenangaben in g)

| Füller 1 (erfindungsgemäß) | |
|---|---|
| **Komponente 1** | **Einwaage in g** |
| | |
| Harzkomponente 1 | 479,8 |
| BYK 023®, Entschäumer, 19%ig in Wasser, BYK Chemie Wesel | 2,9 |
| Surfynol 104®, Benetzungsmittel, Lieferform 100%ig wurde mit Butylglykol, auf 50 % verdünnt, Air Products | 7,8 |
| Korrosionsinhibitor L1®, 100%ig, Erbslöh Krefeld | 2,3 |
| Titandioxid, R-KB 4®, Bayer AG | 74,2 |
| Flammruß 101®, Degussa AG | 1,9 |
| Aerosil R 972®, Bayer AG | 8,3 |
| Talkum AT 1®, Norwegian Talc Deutschland GmbH | 66,3 |
| Quarzmehl F 500®, Quarzwerke GmbH Köln-Frechen | 26,5 |
| ASP 602®, Füllstoff, Chemie-Mineralien KG Bremen | 79,5 |
| Blanc fixe M®, Füllstoff, Sachtleben Chemie GmbH Duisburg | 106,1 |
| Wasser, entionisiert | 146,6 |
| | |

| **Komponente 2** | |
|---|---|
| | |
| Härter aus Beispiel 1 | 77,0 |
| | |
| **Gesamtmenge** | 1079,2 |

| Füller 2 (erfindungsgemäß) | |
|---|---|
| **Komponente 1** | **Einwaage in g** |
| | |
| Harzkomponente 1 | 479,8 |
| BYK 023®, Entschäumer, 19%ig in Wasser, BYK Chemie Wesel | 2,9 |
| Surfynol 104®, Benetzungsmittel, Lieferform 100%ig wurde mit Butylglykol, auf 50 % verdünnt, Air Products | 7,8 |
| Korrosionsinhibitor L1®, 100%ig, Erbslöh Krefeld | 2,3 |
| Titandioxid, R-KB 4®, Bayer AG | 74,7 |
| Flammruß 101®, Degussa AG | 1,9 |
| Aerosil R 972®, Bayer AG | 8,4 |
| Talkum AT 1®, Norwegian Talc Deutschland GmbH | 66,7 |
| Quarzmehl F 500®, Quarzwerke GmbH Köln-Frechen | 26,7 |
| ASP 602®, Füllstoff, Chemie-Mineralien KG Bremen | 80,0 |
| Blanc fixe M®, Füllstoff Sachtleben Chemie GmbH Duisburg | 106,8 |
| Wasser, entionisiert | 147,6 |
| | |

| **Komponente 2** | |
|---|---|
| | |
| Härter aus Beispiel 2 | 80,9 |
| | |
| **Gesamtmenge** | 1086,5 |

| Füller 3 (Vergleich) | |
|---|---|
| **Komponente 1** | **Einwaage in g** |
| | |
| Harzkomponente 1 | 479,8 |
| BYK 023®, Entschäumer, 19%ig in Wasser, BYK Chemie Wesel | 2,8 |
| Surfynol 104®, Benetzungsmittel, Lieferform 100%ig, wurde mit Butylglykol auf 50 % verdünnt, Air Products | 7,5 |
| Korrosionsinhibitor L1®, 100%ig, Erbslöh Krefeld | 2,2 |
| Titandioxid, R-KB 4®, Bayer AG | 71,4 |
| Flammruß 101®, Degussa AG | 1,8 |
| Aerosil R 972®, Bayer AG | 8,0 |
| Talkum AT 1®, Norwegian Talc Deutschland GmbH | 63,8 |
| Quarzmehl F 500®, Quarzwerke GmbH Köln-Frechen | 25,5 |
| ASP 602®, Füllstoff Chemie-Mineralien KG Bremen | 76,5 |
| Blanc fixe M®, Füllstoff, Sachtleben Chemie GmbH Duisburg | 102,1 |
| Wasser, entionisiert | 147,8 |
| | |

| **Komponente 2** | |
|---|---|
| | |
| Härter aus Beispiel 3 | 66,0 |
| | |
| **Gesamtmenge** | 1055,2 |

Die Harzkomponente 1, die Additive und die Füllstoffe werden homogen mit einem Rührer gemischt (ca. 1000 U/min) und anschließend in einer handeslüblichen Perlmühle 30 Minuten angerieben und mit Wasser auf eine Viskosität von 15 Sekunden (DIN 6-mm Becher, 23°C) eingestellt (Komponente 1). Dann wird die Komponente 2 (das jeweilige Polyisocyanat) unter Rühren (ca. 800 U/min) zugegeben und homogen untergemischt. Der Füller 1 hat dann einen Festgehalt von 56,2 Gew.% und einen pH-Wert von 7,8; der Füller 2 hat einen Festgehalt von 55,8 Gew.-% und einen pH-Wert von 7,9 und der Füller 3 hat einen Festgehalt von 54,6 Gew.-% und einen pH-Wert von 7,9.

Zur Prüfung der Viskositätsstabilität über einen Zeitraum von wenigstens 3 Stunden werden die Füller auf eine Auslaufzeit von 36 s (DIN 53 211, 4-mm-Düse, 23°C) eingestellt und stündlich die Auslaufzeit bestimmt.

Die Applikation der 2K-PUR-Füller erfolgt mit einer handelsüblichen Spritzpistole direkt auf entfettete, angeschliffene Stahlbleche (15 x 30 cm) in einer Schichtdicke von ca 60 µm. Auf ein zweites 40 x 40 cm großes angeschliffenes Aluminiumblech wird ein Schichtdickenkeil appliziert, um die Blasengrenze und die Lösemittelbeständigkeit zu ermitteln. Die Blasengrenze liegt bei allen Füllern uber 100 µm.

Nach dem Applizieren werden die Bleche zunächst 30 Minuten bei Raumtemperatur, dann 30 Minuten bei 60°C gelagert und anschließend auf Raumtemperatur abgekühlt. Danach ist sowohl die Trockenschleifbarkeit (320iger Schleifpapier) als auch die Naßschleifbarkeit (800er Schleifpapier) bei allen Füllern sehr gut.

Die Bleche werden nun halbseitig mit Papier abgeklebt und die nicht abgeklebte Fläche mit einem lösemittelhaltigen, schwarz pigmentierten, handelsüblichen 2K-PUR-Decklack auf Basis eines Polyacrylatpolyols und eines aliphatischen Polyisocyanats (Permacron Autolack Serie 257/MS Härter plus 3030, Spiess-Hecker) beschichtet (Schichtdicke ca. 60 µm). Durch diesen schwarzen Decklack können Blasen und Krater besonders gut sichtbar gemacht werden. Die Trocknung des Decklacks erfolgt wie beim Füller durch 30 minütige Lagerung bei Raumtemperatur und dann 30 Minuten bei 60°C. Nach weiteren 3 Tagen Lagerung bei Raumtemperatur wird die Pendeldämpfung nach König (DIN 53 157) sowie die Beständigkeit der Füller gegen Wasser und diverse Lösemittel durch Auflegen eines getränkten Wattebauschs geprüft.

Die beschichteten Stahlbleche werden zusätzlich einer speziellen Feuchtebelastung bei 100 % Luftfeuchtigkeit und einer Temperatur von 40°C unterzogen (Kondenswassertest, DIN EN ISO 2409). Dazu wird das Blech auf der Rückseite und an den Kanten zwecks Korrosionsschutz abgeklebt. Zusätzlich wird sowohl ein Teil des nur mit dem Füller beschichteten Blechs als auch ein Teil des mit Füller und Decklack beschichteten Blechs mit einem farblosen Klebeband abgeklebt. Dieser Bereich ist somit gegen die Wassereinwirkung geschützt und dient bei der späteren Beurteilung als Referenz. Die Bleche werden 72 Stunden der feuchten Atmosphäre bei 40°C (Wassertemperatur 50°C) ausgesetzt und danach beurteilt. Dazu wird das farblose Klebeband entfernt und sowohl der Füller als auch der Decklack der belasteten und unbelasteten Stellen visuell verglichen. Weiterhin wird die Haftfestigkeit von Füller und Decklack geprüft (Gitterschnitt). Die Prüfergebnisse sind in der folgenden Tabelle aufgelistet.

| | | Füller 1 | Füller 2 | Füller 3 |
|---|---|---|---|---|
| Viskositätsverlauf, Auslaufzeit in s (DIN-4-mm Becher) | sofort | 36 | 36 | 36 |
| | nach 60 min | 31 | 30 | 22 |
| | nach 120 min | 30 | 30 | 19 |
| | nach 180 min | 30 | 31 | 20 |
| Pendeldämpfung nach König, s (nach 30 min 60°C + 2 h RT) | | 102 | 106 | 112 |
| Lösemittelbeständigkeit (30 min 60°C + 3 d RT)¹⁾ | | | | |
| Belastung: 30 min Wasser | | 0 | 0 | 0 |
| 1 min Isopropanol/Wasser 1:1 | | 2 | 2 | 2 |
| 1 min Butylglykol | | 1 | 1 | 1 |
| 1 min Methoxypropylacetat/Xylol 1:1 | | 3 | 3 | 3 |
| Kondenswassertest (72 h, 40 °C)²⁾ | | | | |
| Haftung; Füller/Füller + Decklack | | 0/0-1 | 0/0 | 4/3 |
| Blasenbildung: Füller/Füller + Decklack | | 0/0-1 | 0/0-1 | 4/4 |

| | | | | |
|---|---|---|---|---|
| 1) 0 = bester Wert (ohne Befund), 5 = schlechtester Wert (stark angelost) | | | | |
| 2). 0 = bester Wert (ohne Befund), 5 = schlechtester Wert (starker Haftverlust bzw. sehr starke Blasenbildung) | | | | |

### Diskussion der Ergebnisse:

Die Füller 1 und 2 haben im Vergleich zu Füller 3 eine deutlich bessere Viskositätsstabilität. Die Härte, Schleifbarkeit, Blasengrenze und Lösemittelbeständigkeit der Füller 1 bis 3 sind vergleichbar gut. Eindeutige Vorteile für die Füller 1 und 2 ergeben sich zusätzlich bei der dreitägigen Feuchtebelastung bei 40°C. Zwischen der nichtbelasteten, abgeklebten Fläche und der belasteten Fläche sowohl beim Fuller als auch beim Decklack sind praktisch keine Unterschiede zu sehen. Im Gegensatz dazu ist die Haftung bei Füller 3 im belasteten Bereich deutlich schlechter als im unbelasteten, abgeklebten Bereich und der belastete Bereich ist im Gegensatz zum unbelasteten Bereich (keine Blasen) übersät mit kleinen Blasen.

### Beispiel 7

### Pigmentierter 2K-PUR-Decklack

Als wasserverdünnbare Harzkomponente 2 dient eine wasserverdünnbare Polyacrylatdispersion auf Basis Methylmethacrylat, Hydroxyethylmethacrylat, Butylacrylat, Acrylsäure, Di-tert.-butylperoxid als Initiator und Dimethylethanolamin als Neutralisationsmittel. Der Feststoffgehalt liegt bei ca. 45 Gew.-% in einer Mischung aus Wasser/Solventnaphtha 100/2-Buthoxyethanol 85/7,5/7,5; der OH-Gehalt beträgt ca 3,3 Gew.-% (bezogen auf Festharz), die Säurezahl beträgt ca. 25 mg KOH/g (bez auf Festharz) und der pH-Wert liegt bei ca. 8,0.

Als Polyisocyanate dienen die Härter aus Beispiel 4 und Beispiel 5. Es wurde ein NCO/OH-Verhältnis von 1,5:1 eingehalten. Bezogen auf Festharz wurden gleiche Additiv und Pigmentmengen verwendet.

Folgende Bestandteile wurden zur Herstellung eines pigmentierten Decklacks eingesetzt (Mengenangaben in g).

| Decklack 1 (erfindungsgemäß) | |
|---|---|
| | **Einwaage in g** |
| **Komponente 1** | |
| | |
| Harzkomponente 2 | 333,7 |
| Surfynol 104 E®, Benetzungsmittel, Air Products | 7,6 |
| Titandioxid, Bayertitan R-KB-4®, Bayer AG | 282,6 |
| Wasser | 45,3 |
| | |

| **Auflackung** | |
|---|---|
| | |
| Harzkomponente 2 | 152,5 |
| Acrysol RM 8®, Verdickungsmittel, Rohm & Haas Deutschland GmbH, Frankfurt/Main, Lieferform mit Ethanol auf 20 % Festkörper verdünnt | 5,2 |
| Byk 346®, Untergrundbenetzungsmittel, BYK-Chemie Wesel | 2,0 |
| Byk 380®, Verlaufsmittel, BYK-Chemie Wesel | 3,0 |
| | |

| **Komponente 2** | |
|---|---|
| | |
| Härter aus Beispiel 4 | 179,1 |
| | |
| **Gesamtmenge** | 1011,0 |

| Decklack 2 (Vergleich) | |
|---|---|
| | **Einwaage in g** |
| **Komponente 1** | |
| | |
| Harzkomponente 2 | 333,7 |
| Surfynol 104 E, Benetzungsmittel, Air Products | 7,4 |
| Titandioxid, Bayertitan R-KB-4, Bayer AG | 274,3 |
| Wasser | 45,3 |
| | |

| **Auflackung** | |
|---|---|
| | |
| Harzkomponente 2 | 152,5 |
| Acrysol RM 8, Verdickungsmittel, Rohm & Haas Deutschland GmbH, Frankfurt/Main, Lieferform mit Ethanol auf 20 % Festkörper verdünnt | 5,0 |
| Byk 346, Untergrundbenetzungsmittel, BYK-Chemie Wesel | 1,9 |
| Byk 380, Verlaufsmittel, BYK-Chemie Wesel | 2,9 |
| | |

| **Komponente 2** | |
|---|---|
| | |
| Härter aus Beispiel 5 | 168,1 |
| | |
| **Gesamtmenge** | 991,1 |

Die Komponente 1 wird 15 min mit einem Dissolver (Randgeschwindigkeit 10 m/s) homogenisiert und anschließend in einer handelsüblichen Perlmühle 30 Minuten angerieben. Dann wird die Komponente 1 mit den Bestandteilen der Auflackung unter Rühren (ca. 800 U/min) homogen gemischt Danach wird die Komponente 2 zugegeben, durch Rühren (ca. 2000 U/min, 2 Minuten) eine homogene Mischung hergestellt und mit Wasser auf eine Verarbeitungsviskosität von ca 30 Sekunden (Auslaufzeit aus DIN 4-mm Becher, 23°C) eingestellt. Der Decklack 1 hat dann einen Festgehalt von 52,3 % und einen pH-Wert von 8,1; der Decklack 2 hat einen Festgehalt von 52,8 % und einen pH-Wert von 8,2.

Die wässrigen 2K-PUR-Lacke werden mittels einer handelsüblichen Spritzpistole auf eisenphosphatierte Stahlbleche (Bonder WH 60 OC) appliziert und bei Raumtemperatur getrocknet, wobei die Trocknungsgeschwindigkeit (DIN 53 150) ermittelt wurde. Die Trockenfilmschichtstärke beträgt bei beiden Filmen ca. 35 µm.

Anschließend wurde die Pendeldämpfung nach König (DIN 53 157), der Glanz nach Gardner (DIN 67 530), die Erichsentiefung (DIN ISO 1520), die Haftfestigkeit (DIN 53 151) sowie die Beständigkeit gegen Aceton und Xylol (5 minütiges Auflegen eines getränkten Wattebauschs) geprüft Die Wasserbeständigkeit der Filme wurde nach einer Trocknungszeit von 24 Stunden durch Eintauchen der durch Klebeband auf der Rückseite und an den Kanten abisolierten Bleche in ein Wasserbad (23°C) geprüft. Prüfkriterien bei diesem Test waren die Haftung, der Glanzabfall und die Blasenbildung (DIN 53 209) Die Prüfergebnisse sind in der nachfolgenden Tabelle aufgeführt.

| **Prüfung** | | **Decklack 1** | **Decklack 2** |
|---|---|---|---|
| | | | |
| Trocknung staubtrocken/klebfrei, h | | 3/6 | 3/6,5 |
| | | | |
| Glanz nach Gardner, 20°/60°, Haze | | 74/85 | 71/84 |
| | | | |
| Pendeldampfung nach König, s | nach 1 Tag | 84 | 84 |
| | nach 7 Tagen | 88 | 83 |
| | nach 14 Tagen | 92 | 87 |
| | | | |
| Erichsentiefung, mm | nach 1 Tag | 9 | 9 |
| | nach 7 Tagen | 9 | 9 |
| | nach 14 Tagen | 9 | 9 |
| | | | |
| Haftfestigkeit, Gitterschnitt¹⁾ | nach 1 Tag | 0 | 0 |
| | nach 7 Tagen | 0 | 1 |
| | nach 14 Tagen | 1 | 1 |
| | | | |
| Acetonbeständigkeit²⁾ | nach 1 Tag | 1 mw | 1 mw |
| | nach 7 Tagen | 1 mw | 1 mw |
| | nach 14 Tagen | 1 mw | 1 mw |
| | | | |
| Xylolbeständigkeit²⁾ | nach 1 Tag | 1 h | 1 w |
| | nach 7 Tagen | 1 mh | 1 mh |
| | nach 14 Tagen | 0 mh | 0 mh |
| | | | |

| **Wasserlagerungstest** | | **Decklack 1** | **Decklack 2** |
|---|---|---|---|
| | | | |
| Haftung, Gitterschnitt¹⁾ | Ausgangswert | 0 | 0 |
| | nach 1 Tag | 1 | 2 |
| | nach 3 Tagen | 3 | 5 |
| | nach 7 Tagen | 5 | 5 |
| | | | |
| Glanzabfall, 20°/60°, Haze | Ausgangswert | 76/87 | 75/87 |
| | nach 1 Stunde | 73/86 | 75/87 |
| | nach 3 Stunden | 74/86 | 74/87 |
| | nach 5 Stunden | 75/87 | 73/87 |
| | nach 7 Stunden | 75/87 | 66/84 |
| | nach 1 Tag | 73/85 | 38/59 |
| | nach 7 Tagen | 70/84 | 19/33 |
| | | | |
| Blasenbildung³⁾ | Ausgangswert | o. B. | o. B. |
| | nach 1 Tag | o. B. | m5/g1 |
| | nach 7 Tagen | o B | m5/g2 |

| **Prüfung** | | **Decklack 1** | **Decklack 2** |
|---|---|---|---|
| | nach 14 Tagen | m5/g1 | m5/g3 |

| | | | |
|---|---|---|---|
| 1): 0 = bester Wert, 5 = schlechtester Wert | | | |
| 2): m = matt, w = weich, h = hart; 0 = bester Wert (ohne Befund), 5 = schlechtester Wert (völlig aufgelöst) | | | |
| 3): o. B. = ohne Befund, m5 = sehr viele Blasen; g1= sehr kleine Blasen, g5 = sehr große Blasen | | | |

### Diskussion der Ergebnisse:

Bezüglich Trocknung, Glanz, Filmharte, Filmelastizität, Haftung und Lösemittelbeständigkeit gibt es zwischen Decklack 1 und Decklack 2 nahezu keine Unterschiede. Der entscheidende Unterschied zeigt sich bei der Wasserbeständigkeit im Wasserlagerungstest. Nach 7 Tagen zeigt der Lackfilm auf Basis von Decklack 1 kaum einen merklichen Glanzabfall und keine Blasen. Dagegen nimmt der Glanz des Films auf Basis von Decklack 2 schon nach 1 Tag beträchtlich ab und ist schon übersät mit sehr kleinen Blasen. Nach 7 Tagen zeigt der Film dann sehr starken Glanzabfall und ist übersät mit mittelgroßen Blasen.

### Beispiel 8:

### 2K-PUR Klarlack

Als Harzkomponente wird Harzkomponente 2 aus Beispiel 7 verwendet. Als Vernetzer dienen die Härter aus Beispiel 4 bzw. 5. Es wurde ein NCO/OH-Verhältnis von 1,5:1 eingehalten. Bezogen auf Festharz wurden gleiche Mengen an Additiven verwendet.

Folgende Bestandteile wurden zur Herstellung eines 2K-PUR Klarlacks eingesetzt (Mengenangaben in g)

| Klarlack 1 (erfindungsgemäß) | |
|---|---|
| | **Einwaage in g** |
| **Komponente 1** | |
| | |
| Harzkomponente 2 aus Beispiel 7 | 589,6 |
| Surfynol 104, Benetzungsmittel, Lieferform 100%ig wurde mit Butylglykol, auf 50 % verdünnt, Air Products | 13,4 |
| Borchigel PW 25, Verdickungsmittel, 25%ig in Propylenglykol/Wasser 1:1, Borchers GmbH Monheim | 1,8 |
| | |

| **Komponente 2** | |
|---|---|
| | |
| Härter aus Beispiel 4 | 227,7 |
| | |
| Gesamtmenge | 832,5 |

| Klarlack 2 (Vergleich) | |
|---|---|
| | **Einwaage in g** |
| **Komponente 1** | |
| | |
| Harzkomponente 2 aus Beispiel 7 | 598,2 |
| Surfynol 104, Benetzungsmittel, Lieferform 100%ig wurde mit Butylglykol, auf 50 % verdünnt, Air Products | 13,0 |
| Borchigel PW 25, Verdickungsmittel, 25%ig in Propylenglykol/Wasser 1:1, Borchers GmbH Monheim | 1,7 |
| | |

| **Komponente 2** | |
|---|---|
| | |
| Härter aus Beispiel 5 | 206,7 |
| | |
| Gesamtmenge | 819,6 |

Die Komponente 1 wird mit den Additiven unter Rühren gemischt und auf eine Viskosität von 50 Sekunden (DIN 6 mm Becher, 23°C) eingestellt Dann wird die Komponente 2 unter Rühren zugegeben (1000 U/min) und untergemischt. Es wird mit Wasser auf eine Verarbeitungsviskosität von 24 Sekunden (DIN 4 mm Becher, 23°C) eingestellt. Der Klarlack 1 hat dann einen Festgehalt von 46, 3 % und einen pH-Wert von 8,1; der Klarlack 2 hat einen Festgehalt von 44,8 % und einen pH-Wert von 8,2.

Die wässrigen 2K-PUR-Klarlacke werden mittels einer handelsüblichen Spritzpistole auf zuvor mit einem konventionellen, lösemittelhaltigen 2K-PUR-Füller und einem konventionellen, löse-mittelhaltigen 2K-PUR metallic Basislack (magnetit blau metallic) beschichtete Bleche appliziert. Dabei wird ein Schichtdickenkeil gespritzt, um die Blasengrenze zu ermitteln. Es werden 3 Spritzgänge durchgeführt, wobei zwischen jedem Spritzgang eine Ablüftzeit von 15 Minuten liegt. Danach werden die Bleche 30 Minuten bei Raumtemperatur gelagert und dann 30 Minuten bei 60 °C getrocknet Zur Bestimmung der Lackfilmhärte wurden die Klarlacke direkt in einer Schichtstärke von ca. 50 µm auf Glasplatten appliziert und wie oben getrocknet.

Anschließend wurde die Pendeldämpfung nach König (DIN 53 157, Glasplatte), der Glanz und der Glanzschleier nach Gardner (DIN 67 530) und die Beständigkeit gegen Wasser und diverse Lösemittel bestimmt (auf Blech im Bereich einer Schichtdicke von ca. 60 µm) Die Prüfergebnisse sind in der nachfolgenden Tabelle aufgeführt.

| **Prüfung** | | **Klarlack 1** | **Klarlack 2** |
|---|---|---|---|
| | | | |
| Blasenfreie Schichtdicke, µm | | 110 | 80 |
| | | | |
| Pendeldämpfung nach König, s | sofort | 38 | 40 |
| | nach 1 Tag | 115 | 114 |
| | nach 7 Tagen | 142 | 138 |
| | | | |
| Glanz nach Gardner, 20 ° | | 84 | 83 |
| | | | |
| Glanzschleier, Hazen Gloss | | 16,4 | 37,2 |
| | | | |
| Wasserbeständigkeit, 1h Einwirkung | sofort | 2 | 3 |
| | nach 1 Tag | 1 | 1-2 |
| | nach 7 Tagen | 0 | 0 |
| Superbenzinbeständigkeit, 5 min. Einwirkung | sofort | 3 | 3 |
| | nach 1 Tag | 2 | 2 |
| | nach 7 Tagen | 0 | 1 |
| Methoxypropylacetatbeständigkeit, 5 min. Einwirkung | sofort | 3 | 3 |
| | nach 1 Tag | 1 | 2 |
| | nach 7 Tagen | 0 | 1 |
| Xylolbeständigkeit, 5 min. Einwirkung | sofort | 3 | 3 |
| | nach 1 Tag | 2 | 2 |
| | nach 7 Tagen | 1 | 1 |

### Diskussion der Ergebnisse:

Mit dem Klarlack 1 können im Vergleich zu Klarlack 2 höhere Schichtdicken blasenfrei appliziert werden. Bei in etwa gleich hohem Glanz hat der Klarlack 1 einen wesentlich geringeren Glanzschleier als der Klarlack 2 und somit ein besseres, klareres Aussehen. Die Beständigkeiten von Klarlack 1 gegenüber Wasser und diversen Lösemitteln sind geringfügig besser als die von Klarlack 2.

## Patentansprüche

1. Bindemittelkombination für wasserverdünnbare Zweikomponenten-Polyurethanbeschichtungen aus
a) 30 bis 90 Gew.-% einer wäßrigen, hydroxy-funktionellen Harzdispersion
und
b) 10 bis 70 Gew.-% einer Härterkomponente mit einem Gehalt an freien Isocyanatgruppen von 10 bis 23 Gew.-% und einer Viskosität von 50 bis 10 000 mPas (23°C, D = 40, gemessen mit einem Kegel/Platte-Viskosimeter nach DIN 53019),
**dadurch gekennzeichnet, daß** die Komponente b) Isocyanat- und Alkoxysilylgruppen aufweist und das molare Verhältnis der Hydroxygruppen der Komponente a) zu den Isocyanatgruppen der Komponente b) zwischen 0,5 : 1 und 2 : 1 liegt.

2. Bindemittelkombination nach Anspruch 1, **dadurch gekennzeichnet, daß** die Alkoxysilylgruppen in die Komponente b) eingeführt werden durch eine anteilige Reaktion der unmodifizierten Polyisocyanate mit aminofunktionellen Alkoxysilylverbindungen der allgemeinen Strukturformel (I), 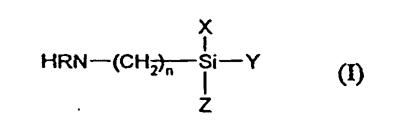 wobei
R für ein Wasserstoffatom oder einen linearen oder verzweigten Alkylrest mit 1 bis 4 Kohlenstoffatomen steht,
n für eine ganze Zahl von 2 bis 4 steht und
X,Y,Z gleiche oder verschiedene organische Reste darstellen, mit der Maßgabe, daß mindestens einer der Reste eine Alkoxygruppe mit 1 bis 4 Kohlenstoffatomen darstellt.

3. Bindemittelkombination nach Anspruch 1, **dadurch gekennzeichnet, daß** die Alkoxysilylgruppen in die Komponente b) eingeführt werden durch eine anteilige Reaktion der unmodifizierten Polyisocyanate mit aminofunktionellen Alkoxysilylverbindungen der allgemeinen Strukturformel (I), 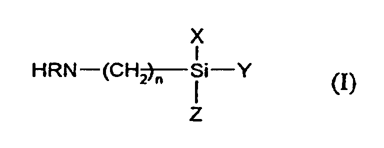 wobei
R für einen linearen oder verzweigten Alkylrest mit 1 bis 4 Kohlenstof^{f}atomen steht,
n für eine ganze Zahl von 2 bis 4 steht und
X,Y,Z gleiche oder verschiedene organische Reste darstellen, mit der Maßgabe, daß mindestens einer der Reste eine Methoxy- oder Ethoxygruppe darstellt.

4. Bindemittelkombination nach Anspruch 1, **dadurch gekennzeichnet, daß** die Alkoxysilylgruppen in die Komponente b) eingeführt werden durch eine anteilige Reaktion der unmodifizierten Polyisocyanate mit aminofunktionellen Alkoxysilylverbindungen, die erhalten werden durch die Umsetzung von aminofunktionellen Alkoxysilylverbindungen der allgemeinen Strukturformel (I), worin R = H, 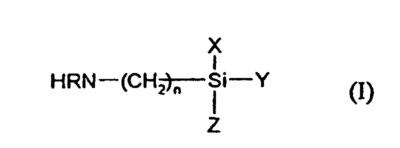 mit Malein- oder Fumarsäureestern der allgemeinen Strukturformel (II)
R'OOC-CH=CH-COOR" (II),
wobei
R' und R'' gleiche oder verschiedene Alkylreste mit 1 bis 8 Kohlenstoffatomen bedeuten.

5. Bindemittelkombination nach Anspruch 1 bis 4, **dadurch gekennzeichnet, daß** das molare Verhältnis der Alkoxysilylgruppen zu den Isocyanatgruppen der Härterkomponente b) 0,008 : 1 bis 0,5 : 1 beträgt.

6. Bindemittelkombination nach Anspruch 1 bis 4, **dadurch gekennzeichnet, daß** das molare Verhältnis der Alkoxysilylgruppen zu den Isocyanatgruppen der Härterkomponente b) 0,008 : 1 bis 0,2 : 1 beträgt.

7. Bindemittelkombination nach Anspruch 1 bis 4, **dadurch gekennzeichnet, daß** das molare Verhältnis der Alkoxysilylgruppen zu den Isocyanatgruppen der Härterkomponente b) 0,015 : 1 bis 0,2 : 1 beträgt.

8. Verwendung der Bindemittelkombinationen gemäß dem Anspruch 1 in wäßrigen Zweikomponenten-Polyurethanbeschichtungen zum Beschichten von mineralischen Baustoffen, Straßenbelägen, Holz und Holzwerkstoffen, metallischen Oberflächen, Kunststoffen, Glas oder Papier.

## Claims

1. Binder combination for water-diluteable two-component polyurethane coatings, comprising
a) 30 to 90 wt. % of an aqueous, hydroxyl-functional resin dispersion
and
b) 10 to 70 wt. % of a curing agent component having a free isocyanate group content of 10 to 23 wt. % and a viscosity of 50 to 10 000 mPas (23°C, D = 40, measured with a cone/plate viscometer in accordance with DIN 53019), ,
**characterized in that** component b) contains isocyanate and alkoxysilyl groups and the molar ratio of the hydroxyl groups of component a) to the isocyanate groups of component b) is between 0.5:1 and 2:1.

2. Binder combination according to Claim 1, **characterized in that** the alkoxysilyl groups are incorporated into component b) by proportionally reacting unmodified polyisocyanates with amino-functional alkoxysilyl compounds of general structural formula (I) 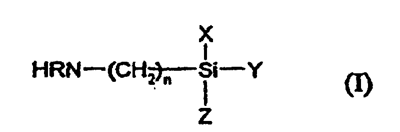 wherein
R represents a hydrogen atom or a linear or branched alkyl radical containing 1 to 4 carbon atoms,
n represents an integer from 2 to 4 and
X, Y and Z represent identical or different organic radicals, with the proviso that at least one of the radicals represents an alkoxy group containing 1 to 4 carbon atoms.

3. Binder combination according to Claim 1, **characterized in that** the alkoxysilyl groups are incorporated into component b) by proportionally reacting unmodified polyisocyanates with amino-functional alkoxysilyl compounds of general structural formula (I) 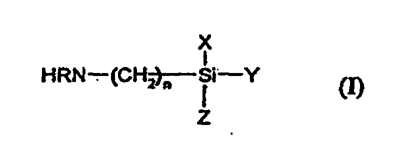 wherein
R represents a linear or branched alkyl radical containing 1 to 4 carbon atoms,
n represents an integer from 2 to 4 and
X, Y and Z represent identical or different organic radicals, with the proviso that at least one of the radicals represents a methoxy or ethoxy group containing 1 to 4 carbon atoms.

4. Binder combination according to Claim 1, **characterized in that** the alkoxysilyl groups are incorporated into component b) by proportionally reacting unmodified polyisocyanates with amino-functional alkoxysilyl compounds obtained by reacting amino-functional alkoxysilyl compounds of general structural formula (I) in which R = H, 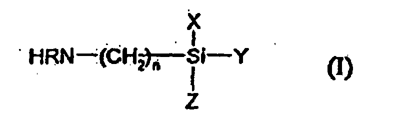 with maleic or fumaric esters of general structural formula (II)
R'OOC-CH=CH-COOR" (II)
wherein
R' and R" represent identical or different alkyl radicals containing 1 to 8 carbon atoms.

5. Binder combination according to Claims 1 to 4, **characterized in that** the molar ratio of alkoxysilyl groups to the isocyanate groups in curing agent component b) is 0.008:1 to 0.5:1.

6. Binder combination according to Claims 1 to 4, **characterized in that** the molar ratio of alkoxysilyl groups to the isocyanate groups in curing agent component b) is 0.008:1 to 0.2:1.

7. Binder combination according to Claims 1 to 4, **characterized in that** the molar ratio of alkoxysilyl groups to the isocyanate groups in curing agent component b) is 0.015:1 to 0.2:1.

8. Use of the binder combinations according to Claim 1 in aqueous two-component polyurethane coatings for coating mineral building materials, road coverings, wood and timber materials, metallic surfaces, plastics, glass or paper.

## Revendications

1. Liant combiné pour produits de revêtements à base de polyuréthannes à deux composants diluables à l'eau, consistant en
a) 30 à 90 % en poids d'une dispersion aqueuse de résine à fonctions hydroxy,
et
b) 10 à 70 % en poids d'un composant durcisseur à une teneur en groupes isocyanate libres de 10 à 23 % en poids et une viscosité de 50 à 10 000 mPas (23°C, D = 40), mesurée au viscosimètre à cône et à plaque selon norme DIN 53 019,
**caractérisé en ce que** le composant b) contient des groupes isocyanate et des groupes alcoxysilyle et **en ce que** le rapport molaire entre les groupes hydroxy du composant a) et les groupes isocyanate du composant b) va de 0,5:1 à 2:1.

2. Liant combiné selon la revendication 1, **caractérisé en ce que** les groupes alcoxysilyle du composant b) ont été introduits par une réaction partielle des polyisocyanates non modifiés avec des dérivés alcoxysilylés à fonctions amino répondant à la formule de structure générale (I) 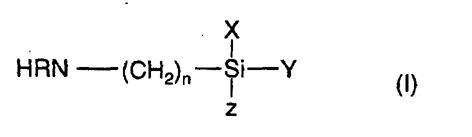 dans laquelle
R représente un atome d'hydrogène ou un groupe alkyle à chaîne droite ou ramifiée en C₁-C₄,
n est un nombre entier allant de 2 à 4, et
X, Y, Z ayant des significations identiques ou différentes, représentent chacun un radical organique, sous réserve qu'au moins un de ces radicaux consiste en un groupe alcoxy en C₁-C₄.

3. Liant combiné selon la revendication 1, **caractérisé en ce que** les groupes alcoxysilyle du composant b) ont été introduits par une réaction partielle des polyisocyanates non modifiés avec des dérivés alcoxysilylés à fonctions amino de formule de structure générale (I), 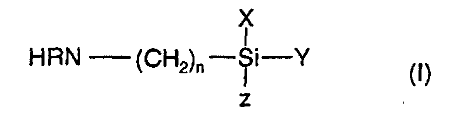 dans laquelle
R représente un groupe alkyle à chaîne droite ou ramifiée en C₁-C₄,
n est un nombre entier allant de 2 à 4, et
X, Y, Z ayant des significations identiques ou différentes, représentent chacun un radical organique, sous réserve que l'un au moins de ces radicaux consiste en un groupe méthoxy ou éthoxy.

4. Liant combiné selon la revendication 1, **caractérisé en ce que** les groupes alcoxysilyle du composant b) ont été introduits par une réaction partielle des polyisocyanates non modifiés avec des dérivés alcoxysilylés à fonctions amino qui ont eux-mêmes été obtenus par réaction de dérivés alcoxysilylés à fonctions amino répondant à la formule de structure générale (I) dans laquelle R = H, 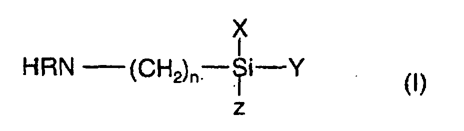 avec des esters maléiques ou fumariques à formule de structure générale (II)
R'OOC-CH=-CH-COOR" (II)
dans lesquelles
R' et R", ayant des significations identiques ou différentes représentent chacun un groupe alkyle en C₁-C₈.

5. Liant combiné selon les revendications 1 à 4, **caractérisé en ce que** le rapport molaire entre les groupes alcoxysilyle et les groupes isocyanate du composant durcisseur b) va de 0,008:1 à 0,5:1.

6. Liant combiné selon les revendications 1 à 4, **caractérisé en ce que** le rapport molaire entre les groupes alcoxysilyle et les groupes isocyanate du composant durcisseur b) va de 0,008:1 à 0,2:1.

7. Liant combiné selon les revendications 1 à 4, **caractérisé en ce que** le rapport molaire entre les groupes alcoxysilyle et les groupes isocyanate du composant durcisseur b) va de 0,015:1 à 0,2:1.

8. Utilisation des liants combinés selon la revendication 1 dans des produits de revêtement aqueux à deux composants à base de polyuréthannes pour le revêtement de matériaux de construction minéraux, de routes, du bois et de matériaux dérivés du bols, de surfaces métalliques, de résines synthétiques, du verre ou du papier.
